Europäisches Patentamt

European Patent Office

Office européen des brevets

(19)

(11) Veröffentlichungsnummer: **0 221 464 B1**

# (12) EUROPÄISCHE PATENTSCHRIFT

(45) Veröffentlichungstag der Patentschrift: **31.07.91**

(51) Int. Cl.5: **F16K 27/02**, E03C 1/02, F16K 11/22

(21) Anmeldenummer: **86114751.0**

(22) Anmeldetag: **23.10.86**

Teilanmeldung 90123387.4 eingereicht am 23/10/86.

(54) **Strangregulierventil.**

(30) Priorität: 07.11.85 DE 3539463
30.01.86 DE 3602744

(43) Veröffentlichungstag der Anmeldung:
**13.05.87 Patentblatt 87/20**

(45) Bekanntmachung des Hinweises auf die Patenterteilung:
**31.07.91 Patentblatt 91/31**

(84) Benannte Vertragsstaaten:
**AT BE CH DE ES FR GB IT LI LU NL SE**

(56) Entgegenhaltungen:
EP-A- 153 427          CH-A- 568 505
DE-A- 1 804 340      DE-A- 2 843 637
FR-A- 1 204 409      GB-A- 227 086

(73) Patentinhaber: **F.W. Oventrop KG**
**Paul-Oventrop-Strasse 1**
**W-5787 Olsberg(DE)**

(72) Erfinder: **Rump, Georg F., Dipl.-Wirtsch.-Ing.**
**In den dichten Weiden 11**
**W-5787 Olsberg(DE)**
Erfinder: **Seiffert, Günther, Dipl.-Ing.**
**Elisabethstrasse 6**
**W-5787 Olsberg(DE)**

(74) Vertreter: **Patentanwälte Dipl.-Ing. Conrad**
**Köchling Dipl.-Ing. Conrad-Joachim Köchling**
**Fleyer Strasse 135**
**W-5800 Hagen 1(DE)**

## Beschreibung

Die Erfindung betrifft ein Strangregulierventil der im Oberbegriff des Anspruches 1 angegebenen Art.

Ein derartiges Strangregulierventil, welches in größere Warmwasserheizungsanlagen eingebaut wird, und mit welchen in den einzelnen Leitungssträngen die Wassermenge und der Differenzdruck eingestellt werden kann, ist aus der EP-A-0153427 bekannt.

Hierbei mündet der Anschlußstutzen zur Aufnahme einer Druckmeßeinrichtung, die zur Messung des Mediumdrucks in Strömungsrichtung hinter dem Ventilsitz bestimmt ist, hinter dem Ventilsitz und nahe dessen in den Gehäusedurchgangskanal ein. Ferner zielt die Mündung des vorgenannten Anschlußstutzens in etwa zum Ventilsitz hin, woraus sich bei geöffnetem Ventil offenbar Beeinflussungen der Strömungscharakteristik ergeben.

Hierbei hat sich nämlich herausgestellt, daß die mittels der eingefügten Meßeinrichtung ermittelten Werte für den Druckverlust des Ventiles mit den tatsächlich eintretendem Druckverlust des Ventils innerhalb der Rohrleitung nicht übereinstimmen.

Ein weiterer Nachteil des aus der EP-A-0153427 bekannten Strangregulierventiles besteht darin, daß eine ordnungsgemäße Anordnung des Strangregulierventiles nur im Vorlauf eines Strömungskreises möglich ist, da nur dann bei der richtigen Anströmung des Strangregulierventiles der Anschlußstutzen für die Füll- und Entleereinrichtung in Strömungsrichtung hinter dem Ventilkegel angeordnet ist. Die lagerichtige Anordnung im Rücklauf dieses Strömungskreises ist nicht möglich, weil dann der Stutzen zur Aufnahme der Entleer- bzw. Befülleinrichtung in Strömungsrichtung vor dem Ventilkörper angeordnet ist, wenn das Ventil in falscher Strömungsrichtung eingebaut ist.

In diesem Falle resultieren daraus aber auch erhebliche, unerwünschte Beeinflussungen der Strömungscharakteristik.

Aufgabe der Erfindung ist es nun, ein Strangregulierventil der im Oberbegriff des Anspruches 1 angegebenen Art, insbesondere unter Beibehaltung der bereits erreichten Vorteile, die unter anderem darin bestehen, daß alle Stutzen, die für die Bedienung des Strangregulierventiles notwendig sind, von ein- und derselben Seite her bequem zugänglich und ablesbar sind, darüber hinaus mit einfachen Mitteln und Maßnahmen derart zu verbessern, daß unerwünschte Beeinflussungen der Strömungscharakteristik unterbleiben.

Die Lösung dieser Aufgabe ist dadurch gekennzeichnet, daß der zur Aufnahme der Druckmeßeinrichtung bestimmte Anschlußstutzen in einem um das Ventiloberteil herumgeführten Kanal mündet und letzterer in den Gehäusedurchgangskanal an der dem vorgenannten Anschlußkanal abgewandten und dem Auslaufstutzen zugewandten Seite des Ventiloberteiles ausmündet.

Dies hat den Vorteil, daß nunmehr der Mediumdruck im Strangregulierventil nahe des Auslaufstutzens und somit weit ab vom Ventilsitz gemessen wird, also in jedem Bereich, in dem sich Verwirbelungen des den Ventilsitz durchströmenden Mediums nicht mehr auf die Druckmessung negativ auswirken, so daß nunmehr die gemessenen Werte den tatsächlichen Druckverlusten entsprechen, ohne daß hierzu das Strangregulierventil in seinen Abmessungen vergrößert werden muß.

Dabei ist es im Sinne der Aufgabe förderlich, wenn der Kanal als Ringkanal ausgebildet ist.

Zudem ist es im Sinne der Aufgabe noch förderlich, wenn der Kanal zum Ablaufstutzen hinzielend ausmündet. Ferner kann der Kanal durch eine im Ventilgehäuse angeordnete, insbesondere angeformte sowie zur Bohrung des Ventiloberteil-Anschlußstutzens hin offene Rinne und durch das dichtschließend eingefügte Ventiloberteil gebildet sein.

Eine unter anderem fertigungstechnisch besonders günstige Ausgestaltung besteht darin, daß die umlaufende Rinne im Ventiloberteil angeordnet ist und daß im Ventilgehäuse der im Bereich der Rinne eine in den Anschlußstutzen mit dem umlaufenden Kanal verbindende, erste Öffnung und eine den Kanal mit dem Gehäusedurchgangskanal verbindende zweite Öffnung vorgesehen sind.

Zudem ist es vorteilhaft, wenn der Kanal in einer zur Längsachse des Ventiloberteiles rechtwinklig verlaufenden Ebene angeordnet ist.

Weitere, im Sinne der Aufgabe vorteilhafte Gestaltungen sind in den Ansprüchen 7 und 8 offenbart.

Um ein Ventil der im Anspruch 1 angegebenen Art derart zu verbessern, daß es sowohl im Vorlauf- als auch im Rücklaufstrang eines Strömungskreises lagerichtig eingebaut werden kann, und dennoch die ordnungsgemäße Entleerung und Befüllung des Strömungskreises ermöglicht, kennzeichnet sich eine vorteilhafte Weiterbildung des vorbeschriebenen Gegenstandes dadurch, daß ein weiterer Anschlußstutzen zur Aufnahme einer Medium-Druckmeßeinrichtung in Strömungsrichtung des Mediums vor dem Ventilsitz angeordnet ist und daß beide Anschlußstutzen etwa gleiche Durchflußquerschnitte aufweisen, die so bemessen sind, daß beide alternativ als Füll- und Entleerstutzen verwendbar sind, wobei im Vorlaufstrang eines Strömungskreises das Füll- und Entleerventil mit dem in Strömungsrichtung hinter dem Ventilsitz befindlichen Anschlußstutzen und im Rücklaufstrang das Füll- und Entleerventil mit dem in Strömungsrichtung vor dem Ventilsitz befindlichen Anschlußstutzen verbindbar ist.

Durch die erfindungsgemäße Ausbildung wird erreicht, daß an beide Anschlußstutzen alternativ die Befüll- und Entleervorrichtung angeschlossen werden kann, so daß die Anordnung des Strangregulierventiles im Strömungskreis unabhängig von der Entnahme- bzw. Befüllmöglichkeit ist. Durch diese Ausbildung ist sichergestellt, daß das Strangregulierventil sowohl im Vorlauf als auch im Rücklauf eines Strömungskreises lagerichtig und strömungsgünstig angeordnet werden kann, wobei dennoch das Befüllen und Entleeren ordnungsgemäß durchgeführt werden kann.

Ausführungsbeispiele der Erfindung sind in den Zeichnungen dargestellt und im folgenden näher beschrieben.

Es zeigt:

Figur 1    ein Strangregulierventil im Längsschnitt;

Figur 2    desgleichen gemäß der Linie II-II der Figur 1 gesehen;

Figur 3    eine Variante ebenfalls im Längsschnitt;

Figur 4    desgleichen entsprechend der Linie IV-IV der Figur 3 gesehen;

Figur 5    ein Anwendungsbeispiel schematisch dargestellt.

Den Ausführungsbeispielen ist ein Ventilgehäuse 1 mit einem Zulaufstutzen 2, einem Ablaufstutzen 3 und drei weiteren Stutzen 4,5 und 6 gemeinsam. Alle Stutzen 2 bis 6 sind am Ventilgehäuse 1 angeformt. Ferner sind die Stutzen 4 bis 6 in einer gemeinsamen und von derselben Längsseite des Ventilgehäuses 1 quer abstrebend angeordnet.

In den Stutzen 4, dessen Längsachse die Längsachse des Ablaufstutzens 3 in einem Winkel von etwa 45° kreuzt, ist ein Ventiloberteil 7 dichtschließend eingeschraubt. In letzterem ist eine Spindel 8 angeordnet, die an einem Ende eine Handhabe 9 und am anderen Ende einen Verschlußkörper 10 trägt. Letzterer wirkt zum Öffnen und Schließen des Ventiles mit einem gehäusefesten Ventilsitz 11 zusammen.

Der Stutzen 5 ist zur Aufnahme einer nicht dargestellten Druckmeßeinrichtung bestimmt.

In den Stutzen 5 kann auch noch ein Füll- und Entleerventil eingefügt werden.

Der Stutzen 6, welcher in Strömungsrichtung des Mediums vor dem Ventilsitz 11 in den Durchgangskanal 12 des Ventilgehäuses 1 einmündet, ist zur Aufnahme einer weiteren Meßeinrichtung bestimmt. Auch in diesen Stutzen kann ein Füll- und Entleerventil eingesetzt werden. Beide Stutzen 5,6 haben etwa gleichen Durchflußquerschnitt. Der Stutzen 5 mündet in einen in Strömungsrichtung des Mediums hinter dem Ventilsitz 11 angeordneten Kanal 13 ein, der um das Ventiloberteil 7 herumgeführt ist und an der dem Stutzen 5 abgewandten Seite und zum Auslaufstutzen 3 hinzielend ausmündet.

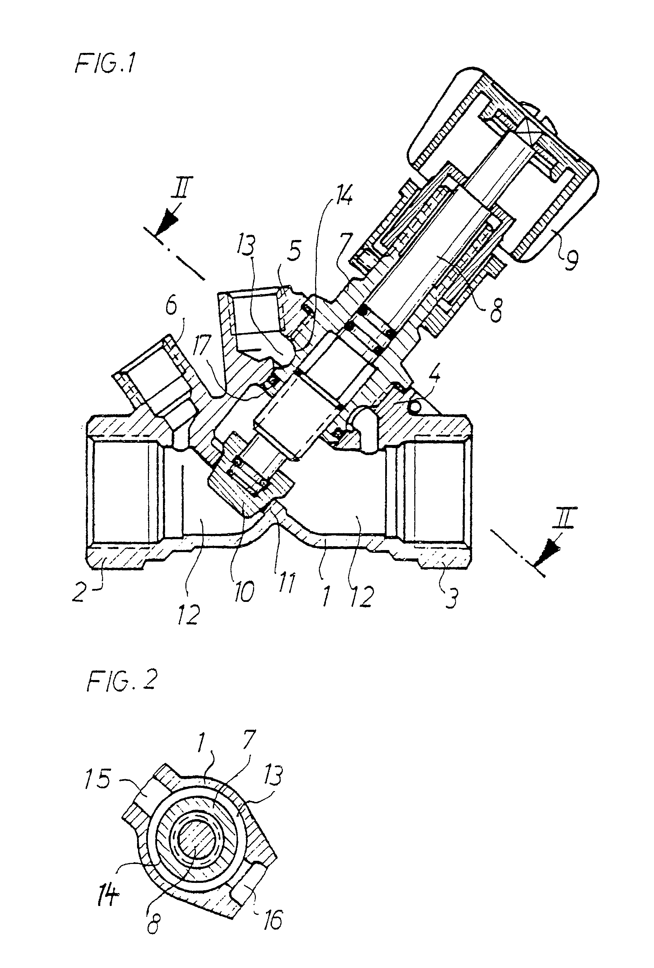

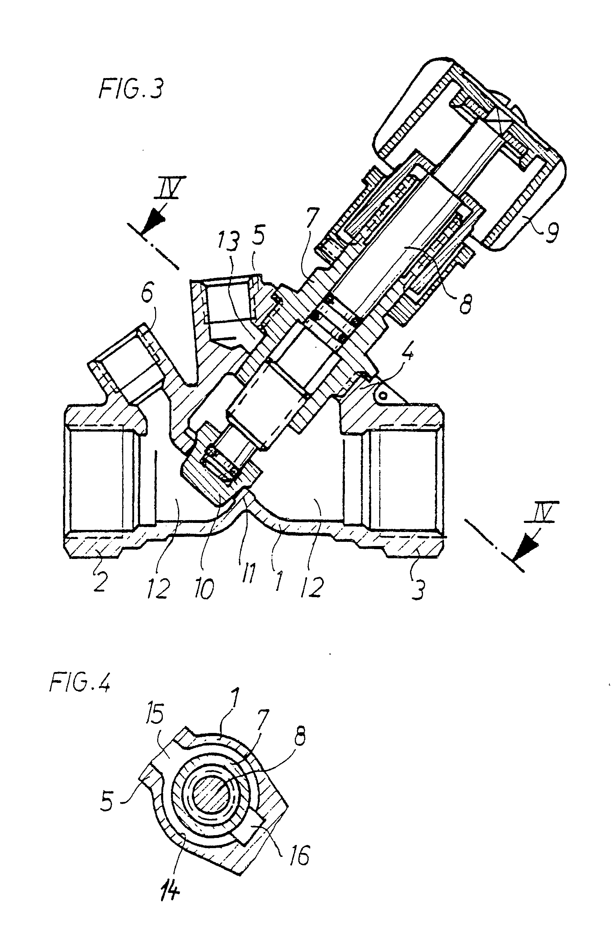

In den Figuren 1 und 2 ist der Kanal 13 durch eine im Ventiloberteil 7 angeformte, umlaufende Rinne 14 und durch die glatte Bohrung des Stutzens 4 gebildet, während bei dem in den Figuren 3 und 4 gezeigten Strangregulierventil die Rinne 14 im Ventilgehäuse 1 angeformt ist und letztere durch den in den Stutzen 4 dichtschließend eingreifenden Teil des Ventiloberteiles 7 zu einem Kanal 13 ergänzt ist.

Außerdem sind im Ventilgehäuse 1 Öffnungen 15 und 16 vorgesehen.

Die Öffnung 15 verbindet den Stutzen 5 mit dem Kanal 13, während die vom Kanal 13 ausgehende Öffnung 16 in den hinter dem Ventilsitz 11 befindlichen Teil des Durchgangskanales 12 mündet und zum Anschlußstutzen 3 hinzielt sowie nahe dessen angeordnet ist.

In den Figuren 1 und 2 ist der dem Verschlußkörper 10 zugewandte Endteil des Ventiloberteiles mittels eines O-Ringes 17 abgedichtet, während in den Figuren 3 und 4 der vorgenannte Endteil mit Haftsitz und mindestens annähernd dichtschließend eingefügt ist.

Die Stutzen 2 und 3 sind zueinander koaxial verlaufend angeordnet.

Die Längsachse der Öffnung 16 schneidet die Längsachse des Auslaufstutzens 3 in einem Winkel von etwa 45°.

Gemäß Fig. 1 sind die in den Gehäusekanal 12 einmündenden Abschnitte der Anschlußstutzen 5,6 zur Längserstreckung des Gehäusekanals bevorzugter Weise rechtwinklig gerichtet angeordnet, um zur Verfälschung der Meßwerte führende Querströmungen zu vermeiden.

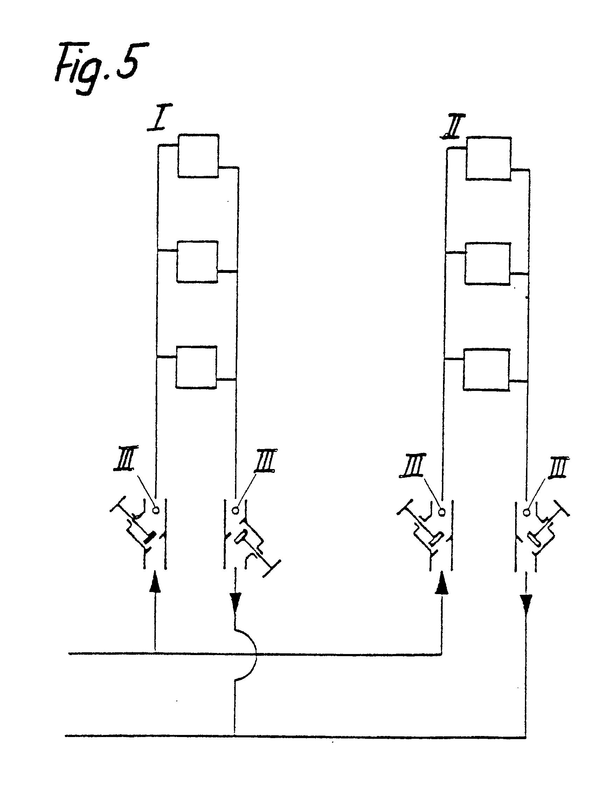

In Fig. 5 ist das Strangregulierventil gemäß der Erfindung in der jeweiligen Einbausituation im linksliegenden Strang 1 dargestellt, während der Stand der Technik gemäß EP-A-0153427 im rechtsbefindlichen Strang 2 verdeutlicht ist. Durch die erfindungsgemäße Ausbildung der Anschlußstutzen 5 und 6, die etwa gleiche Durchflußquerschnitte aufweisen, ist es möglich, wie in Strang 1 dargestellt, beide Ventile in richtiger Strömungsrichtung einzubauen, egal ob der Einbau im Vorlauf oder im Rücklauf erfolgt. Die Strömungscharakteristik und Geräuschbildung der Ventile ist also wunschgemäß erreicht bzw. unterbunden. Je nach Einbaulage wird alternativ der Anschlußstutzen 5 oder der Anschlußstutzen 6 zum Einsatz des Befüll- und Entleerventiles genutzt.

Bei der Ausführungsform gemäß Strang 2, die dem Stand der Technik entspricht, ist das Strangregulierventil nur im Vorlauf lagerichtig einzubauen, während es im Rücklauf entgegen der eigentlich gewünschten Strömungsrichtung eingebaut werden muß, sofern die Entleerung und Befüllung möglich bleiben soll. Dies ist aus dem Grunde beim Stand der Technik notwendig, weil die Entleerungseinrichtung nur mit dem einen der beiden Stutzen verbindbar ist, der nämlich in Normalströmungsrichtung hinter dem Ventilkörper sitzt.

Diese Anordnung ist nachteilig, welcher Nachteil durch die Erfindung beseitigt worden ist.

Im Unterschied zu der in der Zeichnung dargestellten Ausführungsform ist es auch möglich, das Ventil mit Ventiloberteil 7, Spindel 8, Handhabe 9, Verschlußkörper 10 und Ventilsitz 11 nicht als Schrägsitzventil, sondern als Gradsitzventil auszubilden.

Auch dabei ist die erfindungsgemäße vorteilhafte Wirkung durch die konstruktiven Maßnahmen gemäß Vorschlag der Erfindung zu erreichen.

Desweiteren ist es je nach Montage, Ort und Zugänglichkeit vorteilhaft, wenn eine der in den Ansprüchen 2 bis 5 bezeichneten Weiterbildungen verwirklicht wird.

So kann beispielsweise bei dem Ausführungsbeispiel gemäß Fig. 1 der Stutzen 5 aus der von den Stutzen 2,3,4 und 6 gebildeten Ebene um eine bestimmte Winkelstellung versetzt angeordnet sein, ebenso wie dies für den Stutzen 6 möglich wäre. Hierdurch würde die vorteilhafte Einbauweise des Strangregulierventiles nicht beeinträchtigt. Desweiteren ist es möglich, daß beide Anschlußstutzen 5 und 6 zwischen dem Zulaufstutzen 2 und dem Anschlußstutzen 4 angeordnet sind, wie dies in den Zeichnungsfiguren 1 und 3 verdeutlicht ist. Dabei ist der Stutzen 5 lediglich mit einer Ringleitung oder in anderer Weise mit dem zwischen dem Ventilsitz 11 und dem Ablaufstutzen 3 befindlichen Raum zu verbinden. Selbstverständlich wäre es auch möglich, die Anschlußstutzen 5 und 6 zwischen dem Anschlußstutzen 4 und dem Ablaufstutzen 3 anzuordnen, wobei dann der Stutzen 6 durch eine entsprechende Leitungsverbindung mit dem Raum zwischen Zulaufstutzen 2 und Ventilsitz 11 zu verbinden wäre.

Auch die Anordnung in der Weise, daß der Anschlußstutzen 6 zwischen Zulaufstutzen 2 und Anschlußstutzen 4, der Anschlußstutzen 5 aber zwischen Anschlußstutzen 4 und Ablaufstutzen 3 angeordnet wäre, ist möglich und je nach Einbauverhältnissen vorteilhaft.

**Patentansprüche**

1. Strangregulierventil, dessen Gehäuse (1) einen Gehäusedurchgangskanal (12) sowie einen Zu- (2) und einen Ablaufstutzen (3) und dazu quer gerichtete sowie in einer gemeinsamen Ebene von derselben Gehäuselängsseite abstrebend angeordnete Anschlußstutzen (4,5,6) für das Verschlußorgan tragendes Ventiloberteil, für Meßeinrichtungen sowie für ein Füll- und Entleerventil aufweist, wobei ein Anschlußstutzen (5) zur Aufnahme einer Medium-Druckmeßeinrichtung in Strömungsrichtung des Mediums hinter dem Ventilsitz angeordnet ist, dadurch gekennzeichnet, daß der zur Aufnahme der Druckmeßeinrichtung bestimmte Anschlußstutzen (5) in einem um das Ventiloberteil (7) herumgeführten Kanal (13) mündet, und daß dieser Kanal (13) in den Gehäusedurchgangskanal (12) an der dem vorgenannten Anschlußstutzen (5) abgewandten und dem Auslaufstutzen (3) zugewandten Seite des Ventiloberteils (7) ausmündet.

2. Strangregulierventil nach Anspruch 1, dadurch gekennzeichnet, daß der Kanal (13) als Ringkanal ausgebildet ist.

3. Strangregulierventil nach Anspruch 1 oder 2, dadurch gekennzeichnet, daß der Kanal (13) zum Ablaufstutzen (3) hinzielend ausmündet.

4. Strangregulierventil nach einem der Ansprüche 1 bis 3, dadurch gekennzeichnet, daß der Kanal (13) durch eine im Ventilgehäuse (1) angeordnete, insbesondere angeformte sowie zur Bohrung des Ventiloberteil-Anschlußstutzens (5) hin offene Rinne (14) und durch das dichtschließend eingefügte Ventiloberteil (7) gebildet ist.

5. Strangregulierventil nach einem der Ansprüche 1 bis 3, dadurch gekennzeichnet, daß die umlaufende Rinne (14) im Ventiloberteil (7) angeordnet ist, und daß im Ventilgehäuse (1) im Bereich der Rinne (14) eine den Anschluß stutzen (5) mit dem Kanal (13) verbindende, erste Öffnung (15) und eine den Kanal (13) mit dem Gehäusedurchgangskanal (12) verbindende zweite Öffnung (16) vorgesehen sind.

6. Strangregulierventil nach einem der Ansprüche 1 bis 5, dadurch gekennzeichnet, daß der Kanal (13) in einer zur Längsachse des Ventiloberteiles (7) rechtwinklig verlaufenden Ebene angeordnet ist.

7. Strangregulierventil nach einem der Ansprüche 1 bis 6, dadurch gekennzeichnet, daß die Längsachse des zum Anschluß des Ventiloberteiles (7) bestimmten Anschlußstutzens (4) die Längsachse des Ablaufstutzens (3) kreuzt und mit dieser einen spitzen Winkel, insbesondere einen von etwa 45° einschließt.

8. Strangregulierventil nach einem der vorherigen Ansprüche, dadurch gekennzeichnet, daß die Ausmündungen des Kanales (13) und des Anschlußstutzens (6) zum Gehäusekanal (12) rechtwinklig gerichtet sind (Fig. 1).

9. Strangregulierventil nach Anspruch 1, dadurch gekennzeichnet, daß ein weiterer Anschlußstutzen (6) zur Aufnahme einer Medium-Druckmeßeinrichtung in Strömungsrichtung des Mediums vor dem Ventilsitz angeordnet ist und daß beide Anschlußstutzen (5,6) etwa gleiche Durchflußquerschnitte aufweisen, die so bemessen sind, daß beide alternativ als Füll- und Entleerstutzen verwendbar sind, wobei im Vorlaufstrang eines Strömungskreises das Füll- und Entleerventil mit dem in Strömungsrichtung hinter dem Ventilsitz befindlichen Anschlußstutzen (5) und im Rücklaufstrang das Füll- und Entleerventil mit dem in Strömungsrichtung vor dem Ventilsitz befindlichen Anschlußstutzen (6) verbindbar ist.

10. Strangregulierventil nach Anspruch 9, dadurch gekennzeichnet, daß mindestens einer der Anschlußstutzen (5 bzw. 6) außerhalb der vom Zu- (2), Ablauf-(3) und Anschlußstutzen (4) für Ventiloberteil (7) aufgespannten Ebene vom Gehäuse (1) abstrebend angeformt ist.

11. Strangregulierventil nach Anspruch 9 oder 10, dadurch gekennzeichnet, daß beide Anschlußstutzen (5,6) zwischen Zulaufstutzen (2) und Anschlußstutzen (4) angeordnet sind.

12. Strangregulierventil nach Anspruch 9 oder 10, dadurch gekennzeichnet, daß beide Anschlußstutzen (5,6) zwischen Anschlußstutzen (4) und Ablaufstutzen (3) angeformt sind.

13. Strangregulierventil nach Anspruch 9 oder 10, dadurch gekennzeichnet, daß der Anschlußstutzen (6) zwischen Zulaufstutzen (2) und Anschlußstutzen (4), der Anschlußstutzen (5) aber zwischen Anschlußstutzen (4) und Ablaufstutzen (3) angeordnet ist.

**Claims**

1. Pipe leg regulating valve, the housing (1) of which has a housing passage channel (12) and an inlet nozzle (2) and an outlet nozzle (3) and connection nozzles (4, 5, 6), directed transversely to said inlet and outlet nozzles and arranged in a common plane projecting from the same longitudinal side of the housing, for a valve top part bearing the closure element, for measurement devices and for a filling and emptying valve, one connection nozzle (5) being arranged downstream of the valve seat in the flow direction of the medium for receiving a medium pressure measurement device, characterised in that the connection nozzle (5) intended for receiving the pressure measurement device opens out into a channel (13) guided around the valve top part (7), and in that said channel (13) opens out into the housing passage channel (12) on the side of the valve top part (7) facing away from the abovementioned connection nozzle (5) and facing the outlet nozzle (3).

2. Pipe leg regulating valve according to Claim 1, characterised in that the channel (13) is constructed as an annular channel.

3. Pipe leg regulating valve according to Claim 1 or 2, characterised in that the channel (13) opens out towards the outlet nozzle (3).

4. Pipe leg regulating valve according to one of Claims 1 to 3, characterised in that the channel (13) is formed by a groove (14), which is arranged in, particularly moulded onto, the valve housing (1) and is open towards the bore hole of the connection nozzle (5) for the valve top part, and by the valve top part (7) which is inserted in a tightly sealing manner.

5. Pipe leg regulating valve according to one of Claims 1 to 3, characterised in that the circumferential groove (14) is arranged in the valve top part (7), and in that there are provided in the valve housing (1) in the region of the groove (14) a first aperture (15), connecting the connection nozzle (5) to the channel (13), and a second aperture (16) connecting the channel (13) to the housing passage channel (12).

6. Pipe leg regulating valve according to one of Claims 1 to 5, characterised in that the channel (13) is arranged in a plane extending at right angles to the longitudinal axis of the valve top part (7).

7. Pipe leg regulating valve according to one of Claims 1 to 6, characterised in that the longitudinal axis of the connection nozzle (4), intended for connection of the valve top part (7), intersects the longitudinal axis of the outlet nozzle (3) and encloses with the latter an acute angle, particularly an angle of approximately 45°.

8. Pipe leg regulating valve according to one of the preceding claims, characterised in that the discharge mouths of the channel (13) and of the connection nozzle (6) are directed at right angles to the housing channel (12) (Figure 1).

9. Pipe leg regulating valve according to Claim 1, characterised in that a further connection nozzle (6) is arranged upstream of the valve seat in the flow direction of the medium for receiving a medium pressure measurement device, and in that both connection nozzles (5, 6) have approximately equal flow cross sections which are dimensioned such that both can be used alternatively as a filling and emptying nozzle, it being possible in the incoming leg of a flow circulation for the filling and emptying valve to be connected to the connection nozzle (5) situated downstream of the valve seat in the flow direction and, in the return leg, for the filling and emptying valve to be connected to the connection nozzle (6) situated upstream of the valve seat in the flow direction.

10. Pipe leg regulating valve according to Claim 9, characterised in that at least one of the connection nozzles (5 or 6) is moulded on, projecting from the housing (1) outside the plane configured by the inlet nozzle (2), outlet nozzle (3) and connection nozzle (4) for the valve top part (7).

11. Pipe leg regulating valve according to Claim 9 or 10, characterised in that both connection nozzles (5, 6) are arranged between the inlet nozzle (2) and the connection nozzle (4).

12. Pipe leg regulating valve according to Claim 9 or 10, characterised in that both connection nozzles (5, 6) are moulded on between the connection nozzle (4) and the outlet nozzle (3).

13. Pipe leg regulating valve according to Claim 9 or 10, characterised in that the connection nozzle (6) is arranged between the inlet nozzle (2) and the connection nozzle (4), but the connection nozzle (5) is arranged between the connection nozzle (4) and the outlet nozzle (3).

**Revendications**

1. Vanne combinée pour tuyau d'alimentation dont le corps (1) présente un canal de passage (12), ainsi qu'une tubulure d'amenée (2) et de décharge (3) et des tubulures de raccordement (4, 5, 6) orientées transversalement par rapport à celles-ci et sortant dans un même plan du même côté longitudinal du corps, pour un élément supérieur de vanne portant l'organe de fermeture, pour des dispositifs de fermeture, ainsi que pour une vanne de remplissage et de décharge, une tubulure de raccordement (5) étant disposée, dans le sens d'écoulement du dit agent, derrière le siège de vanne, pour recevoir un dispositif indicateur de pression de l'agent caractérisée en ce que la tubulure de raccordement (5) prévue pour recevoir le dispositif indicateur de pression débouche dans un canal (13) entourant la partie supérieure de la vanne (7), et que ce canal (13) débouche dans le canal de passage (12) du côté de la partie supérieure de la vanne (7) opposé à la tubulure de raccordement susdite (5) et tourné vers la tubulure de décharge (3).

2. Vanne combinée pour tuyau d'alimentation selon la revendication 1, caractérisée en ce que le canal (13) a la forme d'un canal circulaire.

3. Vanne combinée pour tuyau d'alimentation selon la revendication 1 ou 2, caractérisée en ce que le canal (13) débouche en direction de la tubulure de décharge (3).

4. Vanne combinée pour tuyau d'alimentation selon une des revendications 1 à 3, caractérisée en ce que le canal (13) est formé par un conduit (14) disposé, en particulier moulé dans le corps de vanne (1), et ouvert vers l'alésage de la tubulure de raccordement (5) de la partie supérieure de la vanne, et par la partie supérieure de la vanne (7) insérée à fermeture hermétique.

5. Vanne combinée pour tuyau d'alimentation selon une des revendications 1 à 3, caractérisée en ce que le conduit circulaire (14) est disposé dans la partie supérieure de la vanne (7) et en ce qu'elle comprend, dans le corps de la vanne (1), au voisinage du conduit (14), une première ouverture (15) reliant la tubulure de raccordement (5) au canal (13) et une deuxième ouverture (16) reliant le canal (13) au canal de passage (12).

6. Vanne combinée pour tuyau d'alimentation selon une des revendications 1 à 5, caractérisée en ce que le canal (13) est disposé perpendiculairement par rapport à l'axe longitudinal de la partie supérieure de la vanne (7).

7. Vanne combinée pour tuyau d'alimentation selon une des revendications 1 à 6, caractérisée en ce que l'axe longitudinal de la tubulure de raccordement (4) destinée au raccordement de la partie supérieure de la vanne (7) croise l'axe longitudinal de la tubulure de décharge (3) et forme avec celle-ci un angle aigu, en particulier de 45° environ.

8. Vanne combinée pour tuyau d'alimentation selon une des revendications qui précèdent, caractérisée en ce que les bouches du canal (13) et de la tubulure de raccordement (6) sont disposées perpendiculairement par rapport au canal de passage (12) (Fig. 1).

9. Vanne combinée pour tuyau d'alimentation selon la revendication 1, caractérisée en ce qu'une autre tubulure de raccordement (6) pour recevoir un dispositif indicateur de pression de l'agent, est disposée devant le siège de la vanne, dans le sens d'écoulement de l'agent, et que les deux tubulures de raccordement (5, 6) présentent des sections de passage pratiquement égales, lesquelles sont dimensionnées de manière à pouvoir être utilisées toutes deux alternativement comme tubulure de remplissage et de décharge, la vanne de remplissage et de décharge dans le tuyau aller d'un circuit d'écoulement pouvant être reliée à la tubulure de raccordement (5) qui se trouve après le siège de vanne, dans le sens de l'écoulement et, dans la canalisation de retour, la vanne de remplissage et de décharge pouvant être reliée à la tubulure de raccordement (6) qui se trouve avant le siège de vanne, dans le sens de l'écoulement.

10. Vanne combinée pour tuyau d'alimentation selon la revendication 9, caractérisée en ce qu au moins une des tubulures de raccordement (5 ou 6) sort du corps 1, extérieurement au plan formé par les tubulures d'amenée (2), de décharge (3) et de raccordement (4) pour la partie supérieure de la vanne (7).

11. Vanne combinée pour tuyau d'alimentation selon la revendication 9 ou 10, caractérisée en ce que les deux tubulures de raccordement (5, 6) sont disposées entre la tubulure d'amenée (2) et la tubulure de raccordement (4).

12. Vanne combinée pour tuyau d'alimentation selon la revendication 9 ou 10, caractérisée en ce que les deux tubulures de raccordement (5, 6) sont formées entre la tubulure de raccordement (4) et la tubulure de décharge (3).

13. Vanne combinée pour tuyau d'alimentation selon la revendication 9 ou 10, caractérisée en ce que la tubulure de raccordement (6) est disposée entre la tubulure d'amenée (2) et la tubulure de raccordement (4), tandis que la tubulure de raccordement (5) est disposée entre la tubulure de raccordement (4) et la tubulure de décharge (3).

FIG.1

FIG. 2

FIG.3

FIG.4

Fig.5